# FASCICULE DE BREVET EUROPEEN

(11) **EP 0 594 471 B1**
(45) Date de publication et mention de la délivrance du brevet: **05.03.2003**
(21) Numéro de dépôt: 93402235.1
(22) Date de dépôt: 14.09.1993
(51) Int. Cl.: G11B 5/33, G11B 11/10, G11B 5/39

(54) **Dispositif de lecture magnétique**
Magnetische Lesevorrichtung
Magnetic read-out device

(30) Priorité: 18.09.1992 FR 9211146
(43) Date de publication de la demande: 27.04.1994
(73) Titulaire: Thales, 75008 Paris (FR)
(72) Inventeur: Jolivet, Denis, F-92402 Courbevoie Cedex (FR)
(74) Mandataire: Guérin, Michel

(56) Documents cités:
- EP-A- 0 154 307
- EP-A- 0 421 874
- EP-A- 0 436 424
- FR-A- 2 095 550
- GB-A- 926 833
- US-A- 3 513 457
- US-A- 4 618 901
- PATENT ABSTRACTS OF JAPAN vol. 11, no. 103 (P-562) (2550) 2 Avril 1987 & JP-A-61 253 619 (HITACHI LTD) 11 Novembre 1986
- NEUES AUS DER TECHNIK, no.2, 15 Mai 1986, WURZBURG DE page 7 'Magnetkopf'
- PATENT ABSTRACTS OF JAPAN vol. 11, no. 144 (P-574) (2591) 12 Mai 1987 & JP-A-61 280 013 (HITACHI LTD) 10 Décembre 1986
- PATENT ABSTRACTS OF JAPAN vol. 3, no. 41 (E-103) 10 Avril 1979 & JP-A-54 021 315 (MITSUBISHI DENKI K.K.)
- IBM TECHNICAL DISCLOSURE BULLETIN, vol.14, no.7, Décembre 1971, ARMONK, N. Y., US page 2160 P. A. ALBERT ET AL. 'Magneto-optical read-out system'
- PATENT ABSTRACTS OF JAPAN vol. 11, no. 233 (P-600) (2680) 30 Juillet 1987 & JP-A-62 046 418 (NIPPON TELEGR & TELEPH CORP <NTT>) 28 Février 1987
- PATENT ABSTRACTS OF JAPAN vol. 10, no. 86 (P-443) (2143) 4 Avril 1986 & JP-A-60 223 042 (NIPPON DENSHIN DENWA KOSHA) 7 Novembre 1985
- PATENT ABSTRACTS OF JAPAN vol. 10, no. 86 (P-443) (2143) 4 Avril 1986 & JP-A-60 223 043 (NIPPON DENSHIN DENWA KOSHA) 7 Novembre 1985
- PATENT ABSTRACTS OF JAPAN vol. 11, no. 45 (P-546) (2492) 10 Février 1987 & JP-A-61 214 260 (HITACHI LTD) 24 Septembre 1986

## Description

L'invention concerne un dispositif de lecture magnétique et notamment une tête de lecture de support d'enregistrement magnétique. Elle trouve une application préférentielle dans un lecteur magnétique de périphériques informatiques ou dans les magnétoscopes professionnels.

Plus particulièrement, l'invention est applicable à une tête de lecture magnéto-optique par effet Kerr en vue de linéariser son fonctionnement.

Dans le cadre général d'un système d'enregistrement et lecture de données sur support magnétique, le capteur de lecture peut être magnéto-optique et utiliser l'effet "Kerr" pour lire les données.

L'effet Kerr magnéto-optique est une propriété de certains matériaux utilisés dans l'industrie des capteurs magnétiques : un faisceau optique polarisé linéairement qui se réfléchit sur la surface d'un matériau ayant de l'effet Kerr voit sa direction de polarisation tourner en fonction du flux magnétique présent dans le matériau, à l'endroit de la réflexion.

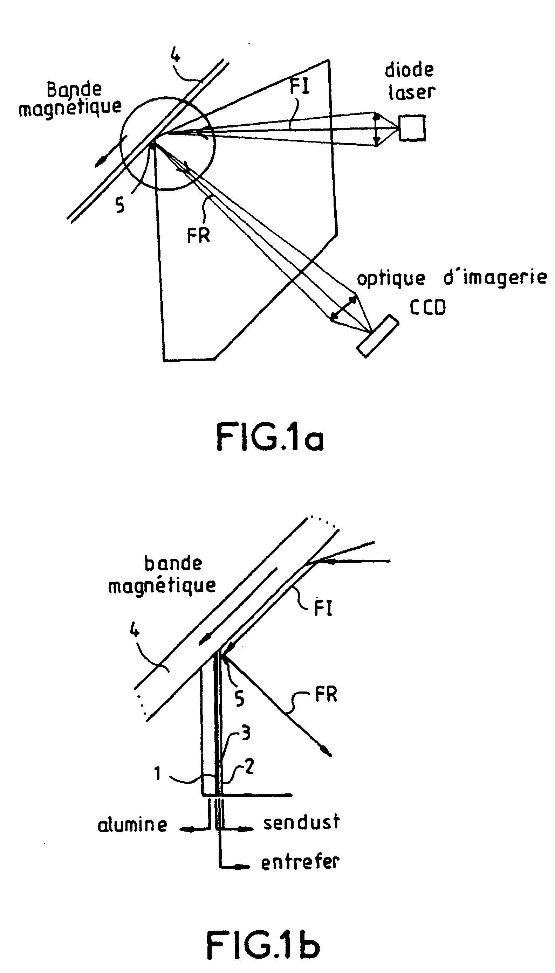

Comme cela est représenté en figures 1a et 1b un capteur de lecture par effet Kerr est organisé en deux couches de matériau magnétique 1, 2 séparées par un isolant non magnétique 3 : cette structure est optimisée pour canaliser le flux magnétique provenant des informations enregistrées sur le média comme cela est représenté sur la figure 1a.

Dans la zone 5 du capteur, celui-ci est en contact ou quasiment en contact avec un support magnétique 4 à lire. Un faisceau optique FI polarisé linéairement se réfléchit sur l'une des couches magnétiques de la tête et la lecture des informations est effectuée par détection de la rotation de polarisation du faisceau réfléchi (effet Kerr) FR.

Ce dispositif fait l'objet de la Demande de Brevet français n° 89 17313 correspondant à FR-A-2 656 723 ou EP-A-0.436 424 reflétant l'état de la technique le plus proche. Cependant, ce dispositif présente les inconvénients suivants :
- L'effet Kerr est un effet de surface, et pour obtenir une sensibilité importante du capteur Kerr, les couches composant le circuit magnétique doivent être aussi fines que possible.
- Dans de telles structures, l'aimantation est organisée en «domaines magnétiques» qui bougent aléatoirement en fonction des informations magnétiques relues sur le support magnétique. Le bruit dû à ces reconfigurations aléatoires diminue le rapport signal à bruit du canal et rend le signal inexploitable.
- Par ailleurs, les couches magnétiques présentent toujours une anisotropie magnétique dans le plan et un champ coercitif résiduel qui se manifestent par des non-linéarités dans le signal relu.

Une technique utilisée pour stabiliser les domaines des couches magnétiques dans les capteurs magnéto-résistifs consiste à ajouter sur la tête une couche magnétisée qui « ancre » les domaines par son champ.

Cette technique a pour but de remédier à ces défauts.

L'invention concerne donc un dispositif de lecture magnétique pour la lecture de pistes d'informations d'un support magnétique à une fréquence d'échantillonnage déterminée comportant une tête de lecture comprenant au moins une couche magnétique comportant une zone de lecture destinée à être disposée selon une direction non parallèle à la direction de défilement des pistes d'informations au support magnétique ainsi que des moyens d'induction dans la zone de lecture, d'un champ d'excitation magnétique, la zone de lecture étant telle qu'elle permet de lire un support magnétique multipistes, caractérisé en ce que le champ d'excitation magnétique est un champ magnétique alternatif superposé au champ magnétique continu, ce champ magnétique alternatif ayant une fréquence égale à un multiple pair de la fréquence d'échantillonnage.

Les différents objets et caractéristiques de l'invention apparaîtront plus clairement dans la description qui va suivre faite à titre d'exemple et dans les figures annexées qui représentent :
- les figures 1a, 1b, 2, un dispositif de lecture magnéto-optique à effet Kerr de type connu ;
- la figure 3, un exemple de réalisation simplifié du dispositif de l'invention ;
- les figures 4 et 5, des exemples de réalisation détaillés du dispositif de l'invention ;
- la figure 6, un exemple de circuit d'alimentation du dispositif de l'invention.

L'invention consiste en un générateur de champ magnétique alternatif de faible amplitude disposé à proximité de la tête : ce dispositif homogénéise la couche de lecture Kerr d'un point de vue magnétique.

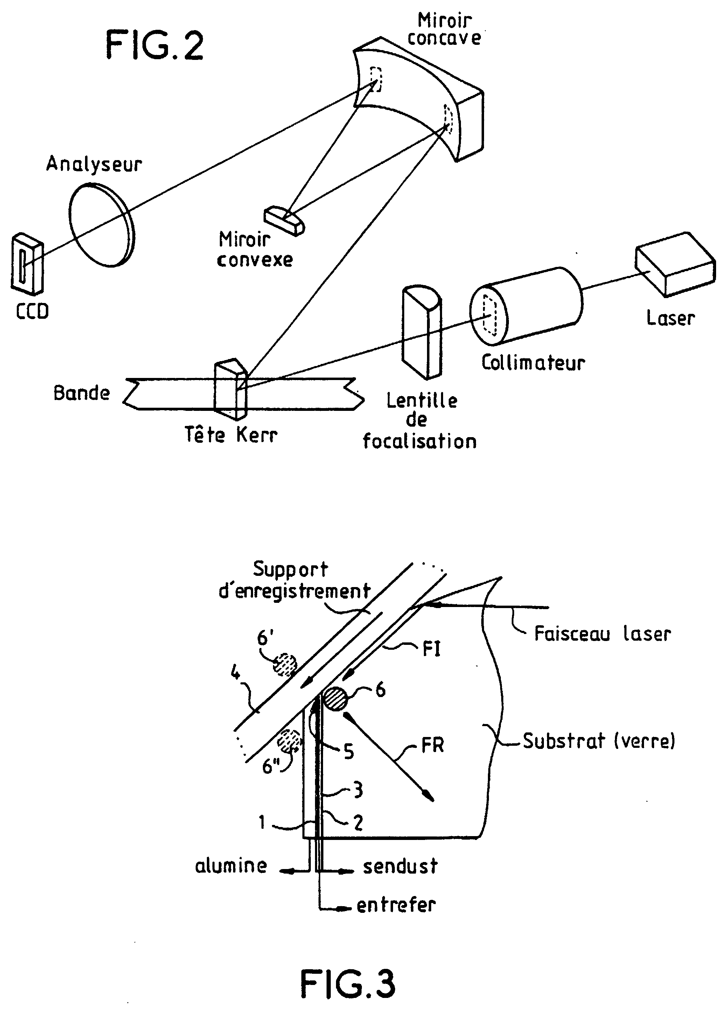

Sur la figure 3, ce générateur est représenté par un dispositif 6 induisant un champ magnétique alternatif superposé (polarisation magnétique) dans la zone 5 où la tête magnétique est sous l'influence d'un champ magnétique à détecter. Ce dispositif peut prendre différentes formes, l'essentiel est qu'il induise un champ magnétique quasi-uniforme dans toute la zone 5. Cela est également nécessaire si le support est multipistes et que la zone 5 permet de lire simultanément plusieurs informations enregistrées.

Sur la figure 3, ce dispositif d'induction de champ magnétique a été représenté par le dispositif 6. Cependant, ce dispositif peut être placé en tout autre emplacement de façon à induire un champ magnétique dans la zone 5, tel que les emplacements 6' ou 6".

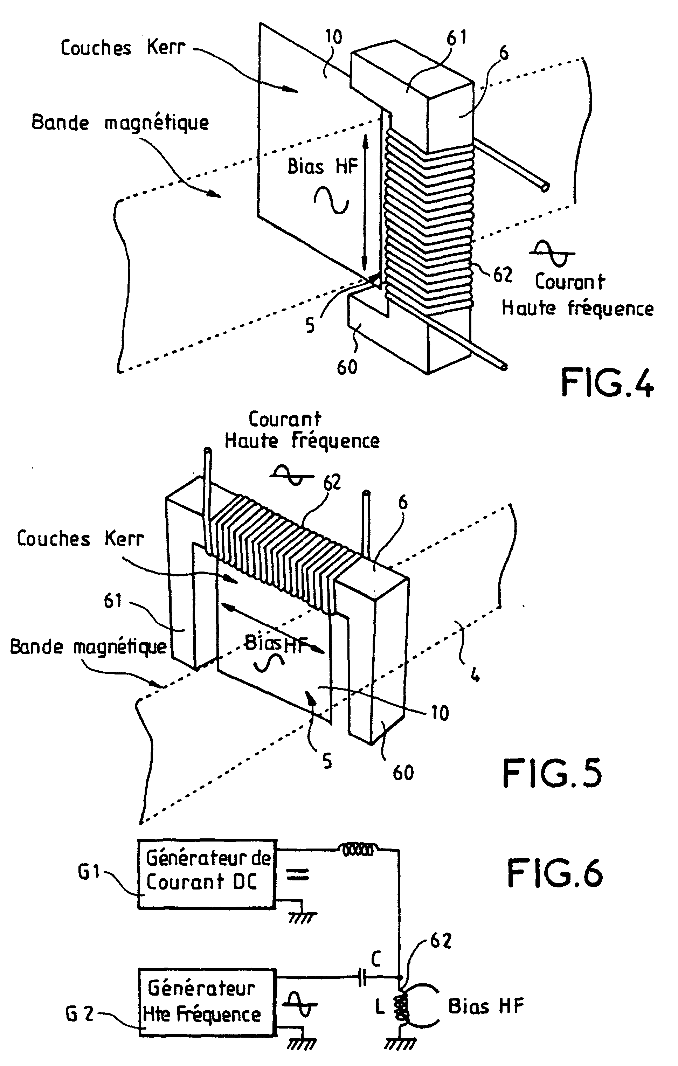

La figure 4 représente un exemple de réalisation appliqué à la lecture d'une bande magnétique. Ce dispositif comporte la tête de lecture par effet Kerr 10 elle-même correspondant aux éléments 1, 2, 3 de la figure 3. Le faisceau lumineux de lecture de la tête magnétique n'a pas été représenté.

La tête de lecture 10 est en contact (ou quasiment en contact) avec le média magnétique à lire qui défile régulièrement lors de la lecture.

Un solénoïde 62 équipé d'un noyau de ferrite 6 situé à cheval sur la tête de lecture génère un champ alternatif dans les couches. Ce champ, rendu homogène sur toute la partie active du capteur par la géométrie du ferrite, « agite » les domaines magnétiques.

Sans bias haute fréquence, le signal lu sur bande est affecté par les non-linéarités magnétiques des couches et par le bruit de reconfiguration des domaines décrits auparavant.

En présence de bias, le champ alternatif appliqué par le solénoïde sur la tête provoque un champ qui se superpose au signal utile provenant du média. Le capteur délivre alors un signal « porteuse » à la fréquence de celui-ci auquel s'ajoute le signal utile provenant de la bande relue.

La fréquence de cette sollicitation doit être supérieure au spectre utile du signal relu de façon à pouvoir être éliminée par filtrage. Le bruit de reconfiguration en domaines et les non-linéarités se produisant en synchronisme avec le bias, ceux-ci sont également rejetés par filtrage.

Sur la figure 5, la zone 5 de la tête magnétique 10 se trouve à proximité d'une bande magnétique 4 à lire. Le dispositif d'induction de champ magnétique alternatif comporte deux pôles 60, 61 placés à proximité de la tête magnétique 10 de façon à ce que le flux induit par le bobinage 62 se referme par la tête magnétique et notamment que le flux magnétique soit induit dans la zone 5. La tête de lecture est orientée selon une direction qui n'est pas parallèle à la direction de défilement de la bande.

Dans le cas d'une magnétique multipistes, la partie active de la tête magnétique 10 est placée transversalement à la direction de la bande et la zone 5 permet de lire simultanément plusieurs pistes. Les pôles 60, 61 sont placés sur les côtés de la tête magnétique transversalement à la bande magnétique. De cette façon, un champ magnétique alternatif (haute fréquence par exemple) est induit dans le plan des couches magnétiques de la tête magnétique et cela dans la zone 5 parallèlement au plan de la bande magnétique.

La figure 5 représente une variante de réalisation du dispositif de la figure 4. Le circuit magnétique 6 et la tête de lecture par effet Kerr 10 sont situés d'un même côté du support magnétique 4 à lire. L'essentiel est que le champ magnétique alternatif soit appliqué parallèlement au plan des couches magnétiques de la tête de lecture et dans la zone 5 soumise au champ magnétique à lire sur le support magnétique.

De plus, l'application d'un champ magnétique continu superposé (polarisation magnétique continue) de faible amplitude permet d'optimiser l'efficacité de la polarisation haute fréquence. Le solénoïde 62 remplit en plus ce rôle de polarisation continue. Un schéma électrique représenté en figure 6 illustre cette possibilité en permettant l'alimentation du solénoïde 62 à l'aide d'un courant continu fourni par un générateur haute fréquence G2.

Dans le cas où le signal du capteur est échantillonné, il y a avantage à placer la fréquence de la polarisation magnétique à un multiple pair de la fréquence d'échantillonnage. Le filtrage est alors naturellement effectué du fait du synchronisme des fréquences, sans repliement de spectre. Par exemple la fréquence de la polarisation magnétique pourra être de 500 KHz ou 1MHz pour une fréquence d'échantillonnage à 50 KHz.

L'invention procure les avantages suivants :

La polarisation alternative augmente le rapport signal à bruit du capteur magnéto-optique dans la bande utile de fréquences.

La polarisation haute fréquence provoque un bruit supplémentaire qui est filtré dans la suite de la chaîne de lecture, et le signal utile est augmenté jusqu'à 6 décibels : tout se passe comme si la polarisation alternative agissait en "fluidifiant magnétique" qui favorise la propagation du champ induit par la bande dans la couche magnétique de lecture.

Le gain en rapport signal à bruit est de 2 à 3 dB, en fonction de la fréquence du signal relu.

La forme d'onde carrée pour la polarisation magnétique permet d'atteindre un meilleur rapport signal à bruit que l'onde sinusoïdale.

Par son rôle de "fluidifiant magnétique", la polarisation magnétique favorise la propagation du champ dans les couches, et le réglage des éléments optiques devient moins pointu, donc plus facile à réaliser.

Dans la description qui précède, l'invention a été appliquée à une tête de lecture magnéto-optique utilisant l'effet Kerr. Cependant, elle est également applicable à toute autre tête de lecture dans laquelle un faisceau lumineux a ses caractéristiques modifiées par le champ magnétique. L'objet essentiel est de prévoir un champ magnétique supplémentaire dont le rôle est de stabiliser les couches magnétiques.

Egalement, l'invention est applicable a tous types de têtes magnétiques dans lesquelles on a besoin de remédier à des instabilités ou des non-linéarités de la tête. Notamment, elle est applicable à tous les capteurs magnétiques constitués de couches minces tels que les têtes magnéto-résistives.

La technique actuellement utilisée pour stabiliser les couches minces magnétiques de ces capteurs consiste à ajouter sur ceux-ci une couche magnétisée qui rend les couches mono-domaine magnétique. Ce champ continu permet une stabilité magnétique des couches au détriment de la sensibilité du capteur.

L'application d'un champ alternatif par un bobinage extérieur ou intégré sur les couches magnétiques des capteurs magnéto-résistifs aurait les mêmes avantages sur l'amplitude du signal et sur la linéarisation du fonctionnement du capteur.

## Revendications

1. Dispositif de lecture magnétique pour la lecture de pistes d'informations d'un support magnétique à une fréquence d'échantillonnage déterminée comportant une tête de lecture comprenant au moins une couche magnétique (1, 2) comportant une zone de lecture (5) destinée à être disposée selon une direction non parallèle à la direction de défilement des pistes d'informations au support magnétique ainsi que des moyens d'induction (6) dans la zone de lecture (5), d'un champ d'excitation magnétique, la zone de lecture (5) étant telle qu'elle permet de lire un support magnétique multipistes, **caractérisé en ce que** le champ d'excitation magnétique est un champ magnétique alternatif superposé au champ magnétique continu, ce champ magnétique alternatif ayant une fréquence égale à un multiple pair de la fréquence d'échantillonnage.

2. Dispositif selon la revendication 1, **caractérisé en ce que** le support magnétique est une bande magnétique.

3. Dispositif selon la revendication 1, **caractérisé en ce que** la tête de lecture est une tête magnétooptique dans laquelle un faisceau lumineux de lecture a des caractéristiques modifiées par un champ magnétique, la zone de lecture (5) recevant le faisceau lumineux de lecture (FI) et retransmettant un faisceau lu (FR).

4. Dispositif selon la revendication 3, **caractérisé en ce que** la tête de lecture est une tête magnéto-optique à effet Kerr comportant deux couches de matériaux magnétiques (1, 2) séparées par une couche d'entrefer (3) en matériau non magnétique et comprenant la zone de lecture (5) destinée à être située dans un champ magnétique à détecter, le faisceau lumineux de lecture (FI) étant polarisé et étant réfléchi par l'une des couches magnétiques (1, 2), un analyseur de polarisations recevant le faisceau lu (FR) et le transmettant à un photodétecteur.

5. Dispositif selon la revendication 4, **caractérisé en ce que** les moyens d'induction magnétique (6) comportent un circuit magnétique possédant deux pôles d'extrémités (60, 61) situés sur deux flancs opposés des couches magnétiques.

6. Dispositif selon la revendication 1, **caractérisé en ce que** les moyens d'induction de champ magnétique (6) induisent le champ magnétique selon une direction orientée selon le plan des couches de matériaux magnétiques de la tête de lecture.

7. Dispositif selon la revendication 4, **caractérisé en ce qu'**il est destiné à lire des informations sur une bande magnétique et que les couches magnétiques de la tête de lecture ont la zone de lecture (5) située à proximité de la bande magnétique.

8. Dispositif selon la revendication 1, **caractérisé en ce qu'**il est destiné à lire des informations arrangées selon une ligne et que la zone de lecture (5) a la forme également d'une ligne parallèle à la ligne d'informations.

9. Dispositif selon la revendication 2, **caractérisé en ce que** les moyens inducteurs de champ magnétique (6) comportent un solénoïde d'induction de champ magnétique (62) alimenté en courant alternatif par un générateur alternatif (G2).

10. Dispositif selon la revendication 9, **caractérisé en ce que** le solénoïde (62) est également alimenté en courant continu par un générateur continu (G1).

11. Dispositif selon la revendication 2, **caractérisé en ce que** le signal de champ magnétique alternatif induit par les moyens d'induction (6), est de forme rectangulaire.

## Claims

1. Magnetic read device for reading information tracks of a magnetic medium at a defined sampling frequency, comprising a read head that includes at least one magnetic layer (1, 2) having a read region (5) intended to be placed in a direction not parallel to the direction in which the information tracks on the magnetic medium run together with means (6) for inducing, in the read region (5), a magnetic excitation field, the read region (5) being such that it allows a multitrack magnetic medium to be read, **characterized in that** the magnetic excitation field is an AC magnetic field superposed on the DC magnetic field, this AC magnetic field having a frequency equal to an even multiple of the sampling frequency.

2. Device according to Claim 1, **characterized in that** the magnetic medium is a magnetic tape.

3. Device according to Claim 1, **characterized in that** the read head is a magnetooptic head in which a read light beam has characteristics modified by a magnetic field, the read region (5) receiving the read light beam (FI) and retransmitting a read beam (FR).

4. Device according to Claim 3, **characterized in that** the read head is a magnetooptic head based on the Kerr effect, comprising two layers (1, 2) of magnetic materials separated by a gap layer (3) made of a non-magnetic material and including the read region (5) intended to be placed in a magnetic field to be detected, the read light beam (FI) being polarized and being reflected by one of the magnetic layers (1, 2), a polarization analyser receiving the read beam (FR) and transmitting it to a photodetector.

5. Device according to Claim 4, **characterized in that** the magnetic induction means (6) comprise a magnetic circuit possessing two end poles (60, 61) located on two opposed sides of the magnetic layers.

6. Device according to Claim 1, **characterized in that** the magnetic field induction means (6) induce the magnetic field in a direction oriented in the plane of the layers of magnetic materials of the read head.

7. Device according to Claim 4, **characterized in that** it is intended for reading information on a magnetic tape and **in that** the magnetic layers of the read head have the read region (5) located near the magnetic tape.

8. Device according to Claim 1, **characterized in that** it is intended for reading information arranged along a line and **in that** the read region (5) also has the form of a line parallel to the line of information.

9. Device according to Claim 2, **characterized in that** the magnetic field inducting means (6) comprise a magnetic field induction solenoid (62) supplied with AC current by a AC generator (G2).

10. Device according to Claim 9, **characterized in that** the solenoid (62) is also supplied with DC current by a DC generator (G1).

11. Device according to Claim 2, **characterized in that** the AC magnetic field signal induced by the induction means (6) is of rectangular waveform.

## Patentansprüche

1. Magnetische Lesevorrichtung zum Auslesen von Informationsspuren eines magnetischen Aufzeichnungsträgers gemäß einer bestimmten Tastfrequenz, mit einem Lesekopf, der mindestens eine Magnetschicht (1, 2) mit einer Lesezone (5) enthält, die gemäß einer zur Durchlaufrichtung der Informationsspuren des magnetischen Aufzeichnungsträgers nicht parallelen Richtung angeordnet ist, sowie mit Mitteln (6) zur Induktion eines magnetischen Anregungsfelds in der Lesezone (5), wobei die Lesezone (5) so ausgebildet ist, daß sie das Auslesen eines magnetischen Mehrspur-Aufzeichnungsträgers erlaubt, **dadurch gekennzeichnet, daß** das magnetische Anregungsfeld ein magnetisches Wechselfeld ist, das dem magnetischen Gleichfeld überlagert ist und eine Frequenz besitzt, die ein geradzahliges Vielfaches der Tastfrequenz ist.

2. Vorrichtung nach Anspruch 1, **dadurch gekennzeichnet, daß** der magnetische Aufzeichnungsträger ein Magnetband ist.

3. Vorrichtung nach Anspruch 1, **dadurch gekennzeichnet, daß** der Lesekopf ein magneto-optischer Kopf ist, in dem ein Lese-Lichtstrahl in seinen Eigenschaften durch ein Magnetfeld verändert wird, wobei die Lesezone (5) den Lese-Lichtstrahl (FI) empfängt und einen reflektierten Strahl (FR) aussendet.

4. Vorrichtung nach Anspruch 3, **dadurch gekennzeichnet, daß** der Lesekopf ein magneto-optischer Kopf mit Kerr-Effekt ist, der zwei Schichten aus magnetischen Materialien (1, 2) getrennt durch eine unmagnetische Spaltschicht (3) aufweist und die Lesezone (5) enthält, die in einem zu erfassenden Magnetfeld liegen soll, und daß der Lese-Lichtstrahl (FI) polarisiert ist und an einer der Magnetschichten (1, 2) reflektiert wird, worauf ein Polarisations-Analysator den reflektierten Lichtstrahl (FR) empfängt und an einen Photodetektor überträgt.

5. Vorrichtung nach Anspruch 4, **dadurch gekennzeichnet, daß** die Mittel (6) zur magnetischen Induktion einen Magnetkreis enthalten, der zwei an den beiden gegenüberliegenden Flanken der magnetischen Schichten liegende Endpole (60, 61) besitzt.

6. Vorrichtung nach Anspruch 1, **dadurch gekennzeichnet, daß** die Mittel (6) zur Induktion des Magnetfelds das Magnetfeld gemäß einer Richtung induzieren, die in der Ebene der magnetischen Schichten des Lesekopfes ausgerichtet ist.

7. Vorrichtung nach Anspruch 4, **dadurch gekennzeichnet, daß** sie zum Lesen von Informationen von einem Magnetband bestimmt ist und daß die magnetischen Schichten des Lesekopfes eine Lesezone (5) in der Nähe des Magnetbands besitzen.

8. Vorrichtung nach Anspruch 1, **dadurch gekennzeichnet, daß** sie zum Lesen von in einer Zeile angeordneten Informationen bestimmt ist und daß die Lesezone (5) ebenfalls die Form einer Zeile parallel zur Zeile von Informationen besitzt.

9. Vorrichtung nach Anspruch 2, **dadurch gekennzeichnet, daß** die Mittel (6) zur Induktion eines Magnetfelds eine Spule (62) zur Induktion des Magnetfelds enthalten, die von einem Wechselstromgenerator (G2) mit Wechselstrom gespeist wird.

10. Vorrichtung nach Anspruch 9, **dadurch gekennzeichnet, daß** die Spule (62) auch mit einem Gleichstrom gespeist wird, die von einem Gleichstromgenerator (G1) stammt.

11. Vorrichtung nach Anspruch 2, **dadurch gekennzeichnet, daß** das magnetische Wechselsignal, das durch die Induktionsmittel (6) induziert wir, Rechteckform besitzt.
